# EUROPÄISCHE PATENTANMELDUNG

(11) **EP 1 965 042 A1**
(43) Veröffentlichungstag der Anmeldung: **03.09.2008**
(21) Anmeldenummer: 07004361.7
(22) Anmeldetag: 02.03.2007
(51) Int. Cl.: F01D 25/24, F01D 25/28, F02C 7/20

(54) **Mittenausrichtung und Fixerung von Statorteilen**

(71) Anmelder: SIEMENS AKTIENGESELLSCHAFT, 80333 München (DE)
(72) Erfinder: Mikulec, Vinko, 47051 Duisburg (DE); Wüller, Martin, 45768 Marl (DE)

(57) **Zusammenfassung**

Die Erfindung betrifft ein Ausrichtsystem (4) zum Ausrichten eines ersten Bauteils (Spiralgehäuse 3) relativ zu einem zweiten Bauteil (90),
aufweisend
ein Ausrichtglied (6), und
ein dem Ausrichtglied (6) zugeordnetes, erstes Sicherungselement (12), und
ein Exzenterelement (13), und
ein dem Ausrichtglied (6) zugeordnetes, zweites Sicherungselement (17), wobei
das Ausrichtglied (6) ein Haltelement (18) durchgreift, das an dem zweiten Bauteil (90) befestigt ist, und wobei
das Exzenterelement (13) mit seinem Einsteckbereich (14) zwischen dem Ausrichtglied (6) und dem Haltelement (18) angeordnet ist, wobei das Ausrichtglied (6) das erste Bauteil (Spiralgehäuse 3) kraftübertragend berührt.

Die Erfindung betrifft auch ein Verfahren zum Ausrichten des ersten Bauteils (Spiralgehäuse 3) relativ zu dem zweiten Bauteil (90) mit dem Ausrichtsystem (4).

Mit dem Ausrichtsystem (4) kann z.B. ein Spiralgehäuse (3) rüttelsicher aber gewollt lösbar und reproduzierbar an einem Getriebekasten einer Getriebemaschine (1) mittig ausgerichtet und fixiert werden.

## Beschreibung

Die Erfindung betrifft ein Ausrichtsystem und ein Verfahren zum Ausrichten eines ersten Bauteils relativ zu einem zweiten Bauteil.

Beispielsweise Strömungsmaschinen, z.B. Getriebemaschinen weisen Statorteile und Rotorteile auf. Als Statorteile im Sinne der Erfindung werden alle feststehenden Komponenten bzw. alle nicht rotierenden Komponenten bezeichnet. Statorteile können beispielsweise ein Spiralgehäuse, ein Konturring usw. sein. Als Rotor werden im Sinne der Erfindung alle rotierbaren Komponenten beispielsweise das Laufrad mit seinen Laufschaufeln bezeichnet.

Getriebemaschinen zeichnen sich durch eine Mehrwellenanordnung mit unterschiedlichen Rotationsgeschwindigkeiten um ein zentrales Antriebsrad aus. Hierdurch wird eine kompakte Einheit für eine mehrstufige Verdichtung oder Expansion für eine Vielzahl von Medien, vorzugsweise von gasförmigen Medien zur Verfügung gestellt.

Diese Getriebemaschinen weisen mindestens einen Getriebekasten auf, an dem ein Spiralgehäuse angeordnet ist. Das Spiralgehäuse trägt den Konturring, der dem Laufrad bzw. dem Verdichterrad zugeordnet ist.

Das Spiralgehäuse muß zum Getriebekasten genau ausgerichtet sein, so dass Spalte beispielsweise zwischen dem Konturring und dem Laufrad bzw. seinen Laufschaufeln relativ klein sind, um Spaltverluste zu reduzieren. Mittels geeigneter Zentrierungen wird beispielsweise das Spiralgehäuse an dem Getriebekasten zentriert, um eine hinreichende Mittenlage des Spiralgehäuses zu erreichen. Bekannt ist aber auch, dass aufwendige Hilfsfixierungen eingesetzt werden um das Spiralgehäuse in der erforderlichen Lage an dem Getriebekasten zu fixieren.

Üblicherweise ist das Spiralgehäuse mit dem Getriebekasten verschraubt.

Schraubverbindungen neigen aber insbesondere unter Schwingungseinfluss dazu, sich selbstständig bzw. ungewollt zu lösen. Löst sich aber die Schraubverbindung, verlässt das Spiralgehäuse seine optimale Position (Mittenlage) an dem Getriebekasten, so dass Spalte beispielsweise zwischen dem Konturring und dem Verdichterrad größer werden, wodurch der Wirkungsgrad des Verdichters bzw. des Expanders reduziert wird. Möglich ist aber auch, dass das Verdichterrad an dem Konturring anschlägt, wodurch z.B. das Verdichterrad zerstört werden kann. In beiden Fällen ist ein erheblicher Aufwand zu betreiben, um eine neue Zentrierung herzustellen, oder um zerstörte Bauteile zu ersetzen.

Insbesondere bei einer erneuten Ausrichtung müssen umfangreiche Ausrichtprotokolle beispielsweise des Verdichters bzw. des Expanders Punkt für Punkt befolgt werden.

Von daher liegt der Erfindung die Aufgabe zu Grunde, ein Ausrichtsystem und ein Verfahren der Eingangs genannten Art mit einfachen Mitteln dahingehend zu verbessern, dass dieses sich nicht ungewollt lösen kann, wobei gleichzeitig eine reproduzierbare Ausrichtung für den Fall von Wartungsarbeiten zur Verfügung gestellt werden soll.

Erfindungsgemäß wird die Aufgabe durch ein Ausrichtsystem mit den Merkmalen des Anspruchs 1 und durch ein Verfahren mit den Merkmalen des Anspruchs 9 gelöst, wobei das Ausrichtsystem
ein Ausrichtglied, welches dem auszurichtenden, ersten Bauteil zugeordnet ist, und
ein dem Ausrichtglied zugeordnetes, erstes Sicherungselement, und
ein Exzenterelement, und
ein dem Ausrichtglied zugeordnetes, zweites Sicherungselement
aufweist, wobei das Ausrichtglied ein Halteelement durchgreift, das an dem zweiten Bauteil befestigt ist, und wobei das Exzenterelement mit seinem Einsteckbereich zwischen dem Ausrichtglied und dem Haltelement angeordnet ist, wobei das Ausrichtglied das erste Bauteil kraftübertragend berührt. Günstiger Weise ist das Ausrichtglied an dem ersten Bauteil befestigt.

In zweckmäßiger Ausgestaltung ist das Ausrichtglied als Gewindebolzen ausgeführt, der mit dem ersten Bauteil verschraubbar ist. Hierzu kann das erste Bauteil eine entsprechende Gewindebohrung aufweisen. Zur rüttelsicheren Befestigung des Ausrichtgliedes an dem ersten Bauteil bzw. in der Gewindebohrung ist es günstig im Sinne der Erfindung, wenn das Ausrichtglied zusätzlich zur Schraubverbindung noch stoffschlüssig gesichert ist. Als stoffschlüssige Sicherung im Sinne der Erfindung wird eine Klebverbindung und/oder eine Schweißverbindung angesehen. Bevorzugter weise wird das Ausrichtglied an seinem Einschraubende mit geeignetem Klebstoff versehen, so dass die Schraubverbindung quasi unlösbar gesichert ist.

Das erste Sicherungselement ist in vorteilhafter Ausgestaltung als Bundmutter ausgeführt, welche stoffschlüssig an dem Ausrichtglied sicherbar ist. Als stoffschlüssige Sicherung wird in diesem Fall eine Schweißverbindung bevorzugt.

Günstig im Sinne der Erfindung ist, wenn das Exzenterelement als Kragenbuchse mit einem Einsteckbereich und einem kopfseitig angeordneten Kragen ausgeführt ist. Zweckmäßiger Weise weist das Exzenterelement eine zu einer Mittelachse exzentrisch angeordnete Durchgangsbohrung auf, so dass das Exzenterelement einen sich, bezogen auf seine Mittelachse, stetig und stufenlos ändernden Innradius von einem Minimum zu einem Maximum und von dem Maximum zu dem Minimum aufweist, wobei ein Außenradius in Umfangsrichtung einen gleich bleibenden Betrag aufweist. Das Exzenterelement ist bevorzugt als exzentrisch gebohrte Hülse ausgeführt.

Wie das erste Sicherungselement ist auch das zweite Sicherungselement vorteilhaft als Bundmutter ausgeführt, welche stoffschlüssig an dem Ausrichtglied sicherbar ist. Als rüttelsichere aber lösbare Sicherung ist wiederum eine Klebverbindung vorteilhaft.

Beispielsweise kann mit zwei der erfindungsgemäßen Ausrichtsysteme ein Spiralgehäuse als erstes Bauteil an einem Getriebekasten als zweites Bauteil einer Getriebemaschine bzw. eines Verdichters oder Expanders reproduzierbar ausgerichtet und fixiert werden. Die Ausrichtsysteme sind vorzugsweise um 90° zueinander angeordnet. Hierzu wird zunächst das Ausrichtglied in seiner Ausgestaltung als Gewindebolzen in den Spiralkragen des Spiralgehäuses eingeschraubt und mittels geeignetem Klebstoff unlösbar gesichert. Das erste Sicherungselement bzw. die Bundmutter wird auf das Ausrichtglied aufgeschraubt, wobei die Bundmutter mit Ihrem Bund zu einem freien Ende des Ausrichtgliedes orientiert ist. Nachdem auch das zweite Ausrichtglied so an dem Spiralgehäuse vormontiert ist, wird das Spiralgehäuse an dem Getriebekasten montiert. Hierbei wird das Ausrichtglied mittig in einem Gabelblech (Halteelement) ausgerichtet. Das erste Sicherungselement wird in Richtung zum Gabelblech geschraubt, bis das Sicherungselement an dem Gabelblech bzw. seinen Gabelschenkeln anliegt. Das Exzenterelement wird über das Ausrichtglied in Richtung zum Gabelblech geschoben, wobei der Einsteckbereich des Exzenterelementes zwischen dem Gabelblech und dem Befestigungsbereich angeordnet ist. Mit seinem Außenumfang liegt das Exzenterelement bevorzugt spielfrei an den Gabelschenkeln des Gabelblechs an. Das zweite Sicherungselement wird auf das Ausrichtglied aufgeschraubt, wobei der Bund in Richtung zu dem Bund des ersten Sicherungselementes orientiert ist. Diese einander entgegen gesetzte Orientierung der beiden Sicherungselemente bzw. Bundmuttern bewirkt eine gegenseitige Verspannung, worauf weiter unten näher eingegangen wird. Diese Schritte werden selbstverständlich bei beiden Ausrichtsystemen durchgeführt.

Die Ausrichtung kann nun einfach mithilfe der Sicherungselementes und des Exzenterelementes gemäß einer speziellen Ausrichtvorgabe zu der Getriebemaschine erfolgen. Hierzu sind beispielsweise Lagerspiel und Lagerspielgruppen in Spieltabellen abgelegt.

Ist das Spiralgehäuse genügend ausgerichtet werden separate Befestigungsschrauben des Spiralgehäuses mit entsprechendem Drehmoment angezogen, und die beiden Sicherungselemente bzw. die Bundmuttern mit entsprechendem Drehmoment gegeneinander verspannt. Vorteilhaft kann nochmals die korrekte Mittenlage überprüft werden.

Zur reproduzierbaren Ausrichtung erhält der Kragen des jeweiligen Exzenterelementes eine Kerbe, wenn das Spiralgehäuse korrekt ausgerichtet ist. Die Kerbe ist bevorzugt zu einem Bezugspunkt orientiert, beispielsweise kann das Halteelement mit einer achsparallelen Kerbe versehen werden, wobei die Kerben bei erneuter Montage einfach wieder fluchten müssen.

Die innere Bundmutter bzw. das erste Sicherungselement wird in der ausgerichteten und fixierten Lage bzw. verspannten Zustand des Spiralgehäuses mit einem Schweißpunkt stoffschlüssig an dem Ausrichtglied bzw. dem Gewindebolzen gesichert. Die äußere Bundmutter bzw. das zweite Sicherungselement kann nun gelöst, abgeschraubt und mit einem geeigneten Klebstoff versehen erneut aufgeschraubt werden. Mittels des Klebstoffs ist das zweite Sicherungselement lösbar, aber nicht ungewollt lösbar gesichert.

Aufgrund des erfindungsgemäßen Ausrichtsystems ist der Spiraleinsatz über eine rüttelsichere aber lösbare und reproduzierbare Einstellung und Fixierung hinreichend zentriert.

Mittels der Gewindebolzen und der Exzenterelemente wird günstiger Weise die Fixierung und Feinjustierung erreicht.

Sollte das Spiralgehäuse einmal aus Wartungsgründen aus seiner zentrierten Lage herausgenommen werden, ist eine erneute Zentrierung und Feineinstellung äußerst leicht durchzuführen. Da das erste Sicherungselement bzw. die innere Bundmutter unlösbar mit dem Ausrichtglied verschweißt ist, kann ein erneutes Einstellen entfallen. Die einmal eingestellte Lage ist so stets erreichbar. Aufgrund der in den Kragen des Exzenterelementes und der in dem Halteelement eingebrachten Kerbe ist die optimale Lage bereits vorgegeben, so dass eine Feinjustierung ohne großen Aufwand durchführbar ist.

Natürlich kann mit dem erfindungsgemäßen Ausrichtsystem bzw. dem erfindungsgemäßen Verfahren nicht nur das beispielhaft genannte Spiralgehäuse zentriert werden, weswegen die Erfindung nicht auf diese Verwendung beschränkt sein soll. Vielmehr ist das erfindungsgemäße Ausrichtsystem bei allen geeigneten Ausrichtaufgaben einsetzbar, bei der eine rüttelsicher aber lösbare und reproduzierbare Ausrichtung sinnvoll ist.

Weiter vorteilhafte Ausgestaltungen der Erfindung sind in den Unteransprüchen und der folgenden Figurenbeschreibung offenbart. Es zeigen
- Fig. 1: einen Längsschnitt durch ein beispielhaftes Spiralgehäuse,
- Fig. 2: einen Querschnitt durch das beispielhafte Spiralgehäuse aus Figur 1 und
- Fig. 3: eine Seitenansicht auf das beispielhafte Spiralgehäuse aus Figur 1.

In den unterschiedlichen Figuren sind gleiche Teile stets mit denselben Bezugszeichen versehen, weswegen diese in der Regel auch nur einmal beschrieben werden.

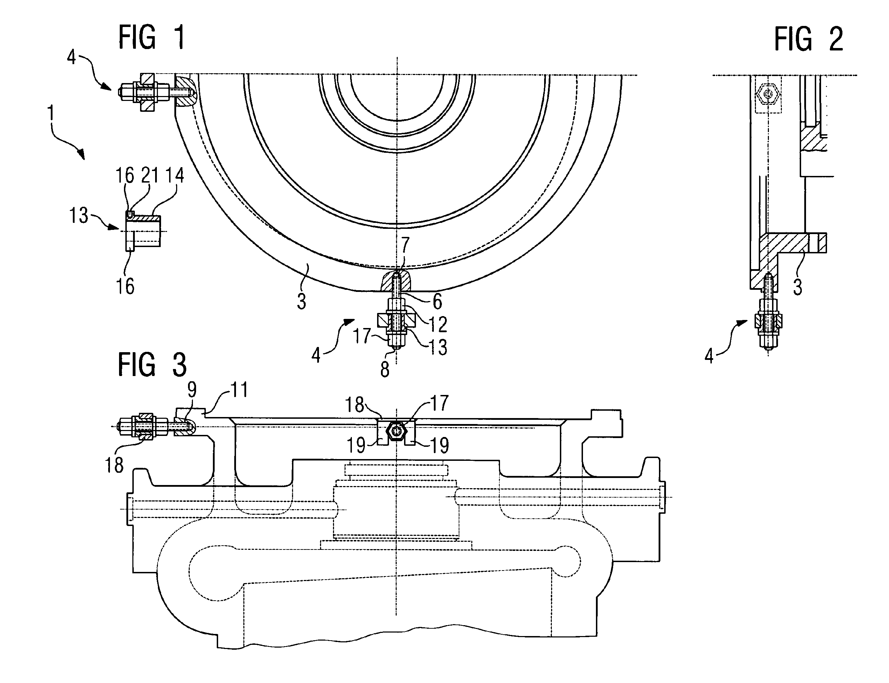

Figur 1 zeigt ein Spiralgehäuse 3 als erstes auszurichtendes Bauteil einer beispielhaften Getriebemaschine 1, die z.B. einen Getriebekasten als zweites Bauteil (90) aufweist. Die Getriebemaschine 1 kann als Verdichter oder als Expander ausgeführt sein.

Das Spiralgehäuse 3 ist über zwei identisch ausgeführte Ausrichtsysteme 4 rüttelsicher aber gewollt lösbar mit dem Getriebekasten verbunden. Mittels der Ausrichtsysteme 4 ist das Spiralgehäuse 3 in dem Getriebekasten ausrichtbar, so dass beispielsweise ein Spaltmaß zwischen einem mit dem Spiralgehäuse 3 zusammenwirkenden aber nicht dargestellten Konturring und einem ebenfalls nicht gezeigten Verdichterrad bzw. seinen Verdichterschaufeln minimal ausgeführt werden kann, um den Wirkungsgrad der Getriebemaschine 1 zu verbessern. Die beiden Ausrichtsysteme 4 sind in der Blattebene um 90° zueinander versetzt angeordnet. Da beide Ausrichtsysteme 4 identisch ausgeführt sind, wird nachfolgend lediglich eines beschrieben.

Das Ausrichtsystem 4 weist ein Ausrichtglied 6 auf, das in dem dargestellten Ausführungsbeispiel als Gewindebolzen mit einem spiralseitigen Befestigungsende 7 und einem dazu gegenüberliegenden freien Ende 8 ausgeführt ist.

Das Ausrichtglied 6 ist in einer Gewindebohrung 9 (Figur 3) des Spiralgehäuses 3, die in dessen Spiralkragen 11 eingebracht ist eingeschraubt, und mittels eines geeigneten Klebstoffs, welcher bevorzugt vor dem Einschrauben auf das Befestigungsende 7 aufgetragen wird, unlösbar gesichert.

Dem Ausrichtglied 6 ist spiralseitig ein erstes, inneres Sicherungselement 12 zugeordnet, das in dem dargestellten Ausführungsbeispiel als Bundmutter ausgeführt ist. Das erste, innere Sicherungselement 12 ist mit seinem Bund in Richtung zum freien Ende 8 des Ausrichtgliedes 6 orientiert.

Das Ausrichtsystem 4 weist ferner ein Exzenterelement 13 auf, das in bevorzugter Ausgestaltung als Kragenbuchse ausgeführt ist. Das Exzenterelement 13 weist einen Einsteckbereich 14 und einen kopfseitig angeordneten Kragen 16 auf. In dem Exzenterelement 13 ist eine zur Mittelachse exzentrisch versetzte Durchgangsbohrung angeordnet, so dass das Exzenterelement 13 einen sich, bezogen auf die Mittelachse, stetig von einem Minimum zu einem Maximum und von dem Minimum zu dem Maximum ändernden Innradius aufweist. Ein Außenradius weist in Umfangsrichtung einen, bezogen auf die Mittelachse gleich bleibenden Betrag auf.

Dem Ausrichtglied 6 ist ein zweites, äußeres Sicherungselement 17 zugeordnet, das wie das erste, innere Sicherungselement 12 vorzugsweise als Bundmutter ausgeführt ist. Das zweite, äußere Sicherungselement 17 ist mit seinem Bund in Richtung zum Befestigungsende 7 orientiert. Die beiden Sicherungselemente 12 und 17 sind somit vorteilhaft zueinander entgegengesetzt dem Ausrichtglied 6 zugeordnet.

Eine Ausrichtung des beispielhaften Spiralgehäuses 3 relativ zu dem Getriebekasten wird nun bevorzugt wie folgt durchgeführt:

Zunächst wird das Ausrichtglied 6 mit seinem Befestigungsende 7 mit Klebstoff versehen in die entsprechende Gewindebohrung 9 in dem Spiralkragen 11 eingeschraubt. Das erste, innere Sicherungselement 12 wird auf das Ausrichtglied 6 aufgeschraubt. Das Spiralgehäuse 3 wird so vormontiert an dem Getriebekasten montiert, wobei das Ausrichtglied 6 ein Haltelement 18, das bevorzugt als Gabelblech (Figur 3) ausgeführt ist, durchgreift. Das Haltelement 18 ist an dem Getriebekasten angeordnet. Das Ausrichtglied 6 wird mittig in dem Halteelement 18 bzw. mittig zu Gabelschenkeln 19 des Gabelblechs ausgerichtet.

Das erste, innere Sicherungselement 12 wird in Richtung zum Haltelement 18 geschraubt, bis der Bund an dem Gabelblech spiralseitig anliegt. Das Exzenterelement 13 wird mit seinem Einsteckbereich 14 auf das Ausrichtglied 6 von dessen freien Ende 8 in Richtung zum Befestigungsende 7 aufgeschoben und eventuell unter verdrehen in dem Haltelement 18 bzw. dem Gabelblech eingeschoben, bis der Kragen 16 an dem Haltelement 18 bzw. den Gabelschenkeln 19 anliegt. Mit seinem Außenumfang liegt das Exzenterelement 13 vorzugsweise spielfrei an den jeweiligen Gabelschenkeln 19 an. Anschließend wird das zweite, äußere Sicherungselement 17 mit seinem Bund zur Spiralseite orientiert auf das Ausrichtglied 6 aufgeschraubt.

Unter Verdrehen vorzugsweise des zweiten, äußeren Sicherungselementes 17 eventuell auch des ersten, inneren Sicherungselementes 12 und gleichzeitig des Exzenterelementes 13 jeweils gleichsinnig und/oder gegensinnig ist das Spiralgehäuse 3 in dem Getriebekasten in die gewünschte Position drei-dimensional ausrichtbar. Natürlich können Vorgaben hierzu beispielsweise aus Spieltabellen entnommen werden. Vorteilhafter Weise können in dem Kragen 16 des Exzenterelementes 13 Blindbohrungen 21 eingebracht sein, um mit einem geeigneten Werkzeug beispielsweise einem Hakenschlüssel das Exzenterelement 13 verdrehen zu können. Natürlich kann der Kragen 16 auch in der Art einer Sechskantmutter ausgeführt sein, damit z.B. ein Maulschlüssel oder dergleichen daran angreifen kann.

Zunächst wird bevorzugt eines der erfindungsgemäßen Ausrichtsysteme 4 mit dem Exzenterelement 13 und dem zweiten, äußeren Sicherungselement 17 so montiert, und die Ausrichtung durchgeführt. Anschließend kann das Exzenterelement 13 und das zweite, äußere Sicherungselement 17 entsprechend auf das zweite Ausrichtsystem 4 aufgebracht werden, und analog zu oben genannten Vorgehensweise verspannt werden. Natürlich können beide Ausrichtsysteme 4 auch gleichzeitig verspannt und so eine gleichzeitige Ausrichtung erreicht werden.

Ist das Spiralgehäuse 3 mit den erfindungsgemäßen Ausrichtsystemen 4 ausgerichtet, werden separate Befestigungsschrauben des Spiralgehäuses 3 mit einem entsprechenden Drehmoment angezogen. Die beiden Sicherungselemente 12 und 17 werden mit einem entsprechenden Drehmoment gegeneinander verspannt, wobei anschließend die Mittenlage des Spiralgehäuses 3 erneut überprüft werden kann. Der Kragen 16 des Exzenterelementes 13 wird mit einer Kerbe markiert. Achsparallel dazu wird eine Kerbe auf einen oder auf beiden Gabelschenkeln 19 aufgebracht. Bei einer Neumontage müssen dann die Kerben einfach wieder fluchten. Natürlich können auch andere geeignete Markierungen als Kerben vorgesehen werden. Dadurch ist ein erneutes Ausrichten auch nach einem Lösen ohne großen Aufwand in die gewünschte bzw. erforderliche Lage möglich bzw. reproduzierbar.

Das erste, innere Sicherungselement 12 wird im ausgerichteten und verspannten Zustand vorzugsweise mit einem Schweißpunkt stoffschlüssig an dem Ausrichtglied 6 gesichert. Das zweite, äußere Sicherungselement 17 wird gelöst, und mit einem geeigneten Klebstoff versehen wieder auf das Ausrichtglied 6 aufgeschraubt, so dass das zweite, äußere Sicherungselement 17 stoffschlüssig mit dem Ausrichtglied 6 gesichert ist. Damit ist das zweite, äußere Sicherungselement 17 gewollt lösbar gesichert.

Insgesamt wird mittels der beiden erfindungsgemäßen Ausrichtsysteme 4 eine rüttelsichere aber gewollt lösbare und reproduzierbare Einstellung bzw. Fixierung des beispielhaften Spiralgehäuses 3 in dem Getriebekasten 2 zur Verfügung gestellt. Die Feinjustierung und Fixierung wird bevorzugt mittels der beiden Ausrichtglied 6 und der beiden Exzenterelemente 13 erreicht.

Zur Demontage bzw. Wiedermontage müssen lediglich das zweite, äußere Sicherungselement 17 und das Exzenterelement 13 gelöst werden.

## Patentansprüche

1. Ausrichtsystem zum Ausrichten eines ersten Bauteils (Spiralgehäuse 3) relativ zu einem zweiten Bauteil (90), aufweisend
ein Ausrichtglied (6), und
ein dem Ausrichtglied (6) zugeordnetes, erstes Sicherungselement (12), und
ein Exzenterelement (13), und
ein dem Ausrichtglied (6) zugeordnetes, zweites Sicherungselement (17),
wobei das Ausrichtglied (6) ein Haltelement (18) durchgreift, das an dem zweiten Bauteil (90) befestigt ist, und
wobei das Exzenterelement (13) mit seinem Einsteckbereich (14) zwischen dem Ausrichtglied (6) und dem Haltelement (18) angeordnet ist,
wobei das Ausrichtglied (6) das erste Bauteil (Spiralgehäuse 3) kraftübertragend berührt.

2. Ausrichtsystem nach Anspruch 1,
**dadurch gekennzeichnet, dass**
das Ausrichtglied (6) an dem ersten Bauteil (Spiralgehäuse 3) befestigt ist.

3. Ausrichtsystem nach Anspruch 1 oder 2,
**dadurch gekennzeichnet, dass**
das Ausrichtglied (6) als Gewindebolzen ausgeführt ist, der stoffschlüssig in dem ersten Bauteil (Spiralgehäuse 3) sicherbar ist.

4. Ausrichtsystem nach einem der vorhergehenden Ansprüche,
**dadurch gekennzeichnet, dass**
das erste Sicherungselement (12) als Bundmutter ausgeführt ist, welche stoffschlüssig an dem Ausrichtglied (6) sicherbar ist.

5. Ausrichtsystem nach einem der vorhergehenden Ansprüche,
**dadurch gekennzeichnet, dass**
das Exzenterelement (13) als Kragenbuchse mit einem Einsteckbereich (14) und einem kopfseitig angeordneten Kragen (16) ausgeführt ist.

6. Ausrichtsystem nach einem der vorhergehenden Ansprüche,
**dadurch gekennzeichnet, dass**
das Exzenterelement (13) eine zu einer Mittelachse exzentrisch angeordnet Durchgangsbohrung aufweist,
so dass das Exzenterelement (13) einen sich, bezogen auf die Mittelachse stetig von einem Minimum zu einem Maximum und von dem Maximum zu dem Minimum verändernden Innenradius aufweist,
wobei ein Außenradius einen, bezogen auf die Mittelachse in Umfangsrichtung gleich bleibenden Betrag aufweist.

7. Ausrichtsystem nach einem der vorhergehenden Ansprüche,
**dadurch gekennzeichnet, dass**
das zweite Sicherungselement (17) als Bundmutter ausgeführt ist, welche stoffschlüssig an dem Ausrichtglied (6) sicherbar ist.

8. Ausrichtsystem nach einem der vorhergehenden Ansprüche zum Ausrichten eines Spiralgehäuses (3) in einem Getriebekasten einer Getriebemaschine (1).

9. Verfahren zum Ausrichten eines ersten Bauteils (Spiralgehäuse 3) relativ zu einem zweiten Bauteil (90), insbesondere mit einem Ausrichtsystem (4) nach einem der vorhergehenden Ansprüche,
**dadurch gekennzeichnet, dass**
das Ausrichtglied (6) mit seinem Befestigungsende (7) vorzugsweise mit Klebstoff versehen in eine entsprechende Gewindebohrung (9) in dem ersten Bauteil (Spiralgehäuse 3) eingeschraubt wird,
wobei das erste, innere Sicherungselement (12) auf das Ausrichtglied (6) aufgeschraubt wird,
wobei das Ausrichtglied (6) ein Haltelement (18), das bevorzugt als Gabelblech ausgeführt ist, durchgreift,
wobei das Haltelement (18) an dem zweiten Bauteil (90) befestigt ist,
wobei das Ausrichtglied (6) mittig in dem Haltelement (18) bzw. mittig zu Gabelschenkeln (19) des Gabelblechs ausgerichtet wird,
wobei das erste, innere Sicherungselement (12) in Richtung zum Haltelement (18) geschraubt wird, bis der Bund an dem Gabelblech anliegt,
wobei das Exzenterelement (13) mit seinem Einsteckbereich (14) auf das Ausrichtglied (6) von dessen freien Ende (8) in Richtung zum Befestigungsende (7) aufgeschoben und eventuell unter Verdrehen in dem Haltelement (18) bzw. dem Gabelblech eingeschoben wird,
wobei das zweite, äußere Sicherungselement (17) auf das Ausrichtglied (6) aufgeschraubt wird.
